# EUROPEAN PATENT APPLICATION

(11) **EP 4 819 430 A1**
(43) Date of publication of application: **07.10.2026**
(21) Application number: 24896278.9
(22) Date of filing: 14.11.2024
(51) Int. Cl.: H02J 3/38, H02J 3/28, H02J 3/24, H02S 40/32

(54) **INERTIA SUPPORT CONTROL METHOD AND APPARATUS FOR GRID-FORMING PHOTOVOLTAIC SYSTEM**

(30) Priority: 28.11.2023 CN 202311609857
(71) Applicant: ELECTRIC POWER RESEARCH INSTITUTE, CHINA SOUTHERN POWER GRID, Guangzhou, Guangdong 510663 (CN)
(72) Inventor: CAI, Dongxiao, Guangzhou, Guangdong 510663 (CN); LIU, Teng, Guangzhou, Guangdong 510663 (CN); HUANG, Weihuang, Guangzhou, Guangdong 510663 (CN); ZHANG, Lidong, Guangzhou, Guangdong 510663 (CN)
(74) Representative: Schmid, Nils T.F.
(86) International application number: PCT/CN2024/131925
(87) International publication number: WO 2025/113187

(57) **Abstract**

An inertia support control method and apparatus for a grid-forming photovoltaic system. When a grid-forming photovoltaic system needs to be started, a VSC inversion unit can be locked, and a DC/DC boost circuit is switched to a charging mode; real-time monitoring is then performed on a direct-current bus voltage, and when the duration during which the direct-current bus voltage remains at a preset target voltage is greater than a preset target duration, the inversion unit is started, and the boost circuit is switched to a maximum power tracking mode; then, a dispatching requirement of the photovoltaic system can be acquired; and the maximum power tracking mode of the boost circuit is maintained when the dispatching requirement is that power generation takes priority, and the boost circuit is switched to a reserved active mode when the dispatching requirement is that inertia support takes priority. A VSC inversion unit and a DC/DC boost circuit are used to control a photovoltaic system, so that flexible inertia support can be realized on the basis of improving the system stability under weak power grid conditions, thereby improving the stability and reliability of a power system.

## Description

The present application claims the priority to Chinese Patent Application No. 202311609857.9, titled "INERTIA SUPPORT CONTROL METHOD AND APPARATUS FOR GRID-FORMING PHOTOVOLTAIC SYSTEM", filed on November 28, 2023 with the China National Intellectual Property Administration, which is incorporated herein by reference in its entirety.

### FIELD

The present disclosure relates to the technical field of power systems, and in particular to a method and an apparatus for controlling inertia support of a grid-forming photovoltaic system.

### BACKGROUND

The proposal of the strategic goals of "carbon peak and carbon neutrality" accelerates a process of constructing a new-type power system. The extensive integration of a high proportion of renewable energy sources and the large-scale application of the high-proportion power electronics equipment can profoundly alter characteristics of the power system, resulting in a reduction in the inertia level of the power system. The renewable energy converters in the related art typically employ a grid-following control method, which are mainly characterized by tracking the external grid frequency through phase-locked loops and exhibiting current source characteristics externally. Using the grid-following control method, power output requires to be adjusted based on the measured frequency change rate to achieve inertia support. The energy required for inertia support is typically provided by configuring energy storage systems. In this process, measurement delays can reduce the inertia response speed, and the stability of the phase-locked loops is poor when connected to weak grids, compromising control effectiveness and resulting in low stability and reliability of the power system.

### SUMMARY

The objective of the present disclosure is to address at least one of the above technical drawbacks, particularly the technical drawback in the related art that the control method causes poor control effectiveness, resulting in low stability and reliability of a power system.

A method for controlling inertia support of a grid-forming photovoltaic system is provided according to the present disclosure. The grid-forming photovoltaic system includes a VSC inverter unit and a DC/DC boost circuit. The method includes: in response to a requirement for starting the grid-forming photovoltaic system, blocking the VSC inverter unit and switching the DC/DC boost circuit to operate in a charging mode based on a preset duty-cycle control strategy; monitoring a direct-current bus voltage in real time, and in response to a period lapses from a moment at which the direct-current bus voltage reaches a preset target voltage being greater than a preset target period, starting the VSC inverter unit based on a preset grid-forming control strategy and switching the DC/DC boost circuit to operate in a maximum-power-point-tracking mode based on the duty-cycle control strategy; acquiring a dispatching requirement of the grid-forming photovoltaic system, where candidates of the dispatching requirement include prioritizing power generation and prioritizing inertia support; keeping, in response to the dispatching requirement being the prioritizing power generation, the DC/DC boost circuit in the maximum-power-point-tracking mode; and switching, in response to the dispatching requirement being the prioritizing inertia support, the DC/DC boost circuit to operate in a reserved active power mode based on the duty-cycle control strategy.

In an embodiment, the switching the DC/DC boost circuit to operate in a charging mode based on a preset duty-cycle control strategy includes: acquiring an actual total voltage, a first reference total voltage, and an actual total current of the grid-forming photovoltaic system; determining a first duty cycle of the DC/DC boost circuit based on the actual total voltage, the first reference total voltage, and the actual total current; and performing pulse width modulation based on the first duty cycle to generate a first control signal, and switching the DC/DC boost circuit to operate in the charging mode using the first control signal.

In an embodiment, the DC/DC boost circuit includes a first proportional-integral stage and a second proportional-integral stage, and the determining a first duty cycle of the DC/DC boost circuit based on the actual total voltage, the first reference total voltage, and the actual total current includes: calculating a first voltage difference between the actual total voltage and the first reference total voltage, and determining a reference total current of the first voltage difference using parameters of the first proportional-integral stage; and calculating a current difference between the actual total current and the reference total current, and determining the first duty cycle corresponding to the current difference using parameters of the second proportional-integral stage.

In an embodiment, the VSC inverter unit includes a lead-lag stage, an integral stage, an alternating-current voltage loop, and a current loop, and the starting the VSC inverter unit based on a preset grid-forming control strategy includes: acquiring an actual total voltage and a second reference total voltage of the grid-forming photovoltaic system, and calculating a second voltage difference between the actual total voltage and the second reference total voltage; determining a phase angle corresponding to the second voltage difference using parameters of the lead-lag stage and the integral stage, and determining a first reference valve-side voltage and a second reference valve-side voltage of the VSC inverter unit using parameters of the alternating-current voltage loop and the current loop; and generating a switching signal based on the phase angle, the first reference valve-side voltage, and the second reference valve-side voltage, and starting the VSC inverter unit based on the switching signal.

In an embodiment, the switching the DC/DC boost circuit to operate in a maximum-power-point-tracking mode based on the duty-cycle control strategy includes: acquiring a reference output voltage, an actual output current, and an actual output power of a photovoltaic string in the DC/DC boost circuit; determining a second duty cycle of the DC/DC boost circuit based on the reference output voltage, the actual output current, and the actual output power; and performing pulse width modulation based on the second duty cycle to generate a second control signal, and switching the DC/DC boost circuit to operate in the maximum-power-point-tracking mode using the second control signal.

In an embodiment, the DC/DC boost circuit further includes a third proportional-integral stage, and the determining a second duty cycle of the DC/DC boost circuit based on the reference output voltage, the actual output current, and the actual output power includes: determining a reference output power of the photovoltaic string based on the reference output voltage and the actual output current; and calculating a first power difference between the actual output power and the reference output power, and determining the second duty cycle corresponding to the first power difference using parameters of the third proportional-integral stage.

In an embodiment, the DC/DC boost circuit further includes a derivative filtering stage, a power distribution stage, an amplitude limiting stage, and a fourth proportional-integral stage, and the switching the DC/DC boost circuit to operate in a reserved active power mode based on the duty-cycle control strategy includes: acquiring an actual total voltage of the grid-forming photovoltaic system and a reference output power of a photovoltaic string in the grid-forming photovoltaic system; determining a reference inertia-support power corresponding to the actual total voltage using parameters of the derivative filtering stage and the power distribution stage, and determining a reference adjustment power corresponding to the reference output power using parameters of the amplitude limiting stage; calculating a second power difference between the reference inertia-support power and the reference adjustment power, and determining a third duty cycle corresponding to the second power difference using parameters of the fourth proportional-integral stage; and performing pulse width modulation based on the third duty cycle to generate a third control signal, and switching the DC/DC boost circuit to operate in the maximum-power-point-tracking mode using the third control signal.

An apparatus for controlling inertia support is provided according to the present disclosure, and the apparatus includes: a first control module, a second control module, a requirement acquisition module, a mode keep module, and a third control module.

The first control module is configured to, in response to a requirement for starting a grid-forming photovoltaic system, block a VSC inverter unit and switch a DC/DC boost circuit to operate in a charging mode based on a preset duty-cycle control strategy.

The second control module is configured to monitor a direct-current bus voltage in real time, and in response to a period lapses from a moment at which the direct-current bus voltage reaches a preset target voltage being greater than a preset target period, start the VSC inverter unit based on a preset grid-forming control strategy and switch the DC/DC boost circuit to operate in a maximum-power-point-tracking mode based on the duty-cycle control strategy.

The requirement acquisition module is configured to acquire a dispatching requirement of the grid-forming photovoltaic system, where candidates of the dispatching requirement include prioritizing power generation and prioritizing inertia support.

The mode keep module is configured to keep, in response to the dispatching requirement being the prioritizing power generation, the DC/DC boost circuit in the maximum-power-point-tracking mode.

The third control module is configured to switch, in response to the dispatching requirement being the prioritizing inertia support, the DC/DC boost circuit to operate in a reserved active power mode based on the duty-cycle control strategy.

A storage medium is further provided according to the present disclosure. The storage medium stores computer readable instructions. The computer readable instructions, when executed by one or more processors, cause the one or more processors to perform the method for controlling inertia support according to any one of the above embodiments.

A computer device is further provided according to the present disclosure. The computer device includes: one or more processors, and a memory.

The memory stores computer-readable instructions, and the computer-readable instructions, when executed by the one or more processors, cause the one or more processors to perform the method for controlling inertia support according to any one of the above embodiments.

It can be seen from the above technical solutions that the embodiments of the present disclosure have the following advantages.

A method and an apparatus for controlling inertia support of a grid-forming photovoltaic system is provided according to the present disclosure. The grid-forming photovoltaic system includes a VSC inverter unit and a DC/DC boost circuit. In response to a requirement for starting the grid-forming photovoltaic system, the VSC inverter unit is blocked, and the DC/DC boost circuit is switched to operate in a charging mode based on a preset duty-cycle control strategy, thereby achieving smooth charging of the configured energy storage in the grid-forming photovoltaic system during starting of the grid-forming photovoltaic system, providing stable power support to the grid-forming photovoltaic system when necessary. During charging of the configured energy storage, a direct-current bus voltage is monitored in real time. In response to a period lapses from a moment at which the direct-current bus voltage reaches a preset target voltage being greater than the preset target period, the VSC inverter unit is started based on the preset grid-forming control strategy, and the DC/DC boost circuit is switched to operate in the maximum-power-point-tracking mode based on the duty-cycle control strategy. This achieves the maximum power output of the photovoltaic string and improving power generation efficiency and energy utilization of the grid-forming photovoltaic system. Then, the dispatching requirement of the photovoltaic system is acquired, and the mode of the grid-forming photovoltaic system is switched based on the dispatching requirement. For example, in response to the dispatching requirement being the prioritizing power generation, the DC/DC boost circuit is kept in the maximum-power-point-tracking mode, ensuring that all inertia support energy for the grid-forming photovoltaic system originates from energy stored in the configured energy storage. In response to the dispatching requirement being the prioritizing inertia support, the DC/DC boost circuit is switched to operate in the reserved active power mode based on the duty-cycle control strategy, primarily utilizing the energy stored in the configured energy storage while supplementing with the reserved active power of the photovoltaic panels to provide inertia support to the grid-forming photovoltaic system. In the present disclosure, by utilizing the grid-forming control strategy of the VSC inverter unit and three control modes of the DC/DC boost circuit for coordinated control of the grid-forming photovoltaic system, flexible inertia support is achieved while improving system stability under a weak grid condition, thereby improving stability and reliability of the power system.

### BRIEF DESCRIPTION OF THE DRAWINGS

To clearly illustrate technical solutions in embodiments of the present disclosure or in the related art, drawings referred to describe the embodiments or the related art are briefly described hereinafter. Apparently, the drawings in the following description show only some embodiments of the present disclosure, and for those skilled in the art, other drawings may be obtained based on these drawings without any creative efforts.
FIG. 1 is a flowchart of a method for controlling inertia support of a grid-forming photovoltaic system according to an embodiment of the present disclosure;
FIG. 2 is a schematic structural diagram of a circuit topology of a grid-forming photovoltaic system according to an embodiment of the present disclosure;
FIG. 3 is a schematic diagram of controlling a DC/DC boost circuit according to an embodiment of the present disclosure;
FIG. 4 is a schematic diagram of controlling a direct-current voltage loop according to an embodiment of the present disclosure;
FIG. 5 is a flowchart of an apparatus for controlling inertia support of a grid-forming photovoltaic system according to an embodiment of the present disclosure; and
FIG. 6 is a schematic diagram of an internal structure of a computer device according to an embodiment of the present disclosure.

### DETAILED DESCRIPTION

Hereinafter technical solutions in embodiments of the present disclosure are described clearly and completely in conjunction with the drawings for the embodiments of the present disclosure. Apparently, the embodiments described below are only some embodiments, rather than all the embodiments of the present disclosure. Based on the embodiments of the present disclosure, all other embodiments obtained by those skilled in the art without any creative efforts fall into the protection scope of the present disclosure.

The proposal of the strategic goals of "carbon peak and carbon neutrality" accelerates a process of constructing a new-type power system. The extensive integration of a high proportion of renewable energy sources and the large-scale application of the high-proportion power electronics equipment can profoundly alter characteristics of the power system, resulting in a reduction in the inertia level of the power system. The renewable energy converters in the related art typically employ a grid-following control method, which are mainly characterized by tracking the external grid frequency through phase-locked loops and exhibiting current source characteristics externally. Using the grid-following control method, power output requires to be adjusted based on the measured frequency change rate to achieve inertia support. The energy required for inertia support is typically provided by configuring energy storage systems. In this process, measurement delays can reduce the inertia response speed, and the stability of the phase-locked loops is poor when connected to weak grids, compromising control effectiveness and resulting in low stability and reliability of the power system.

In view of this, technical solutions are provided according to the present disclosure as follows.

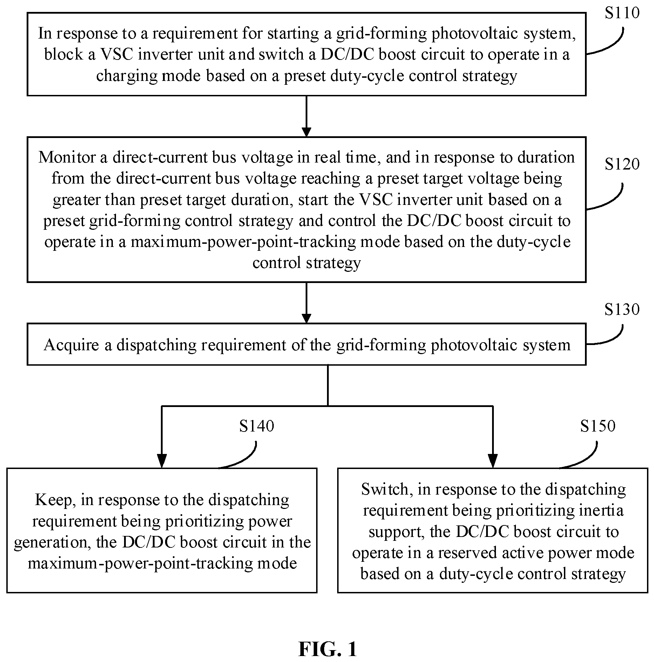

In an embodiment, as shown in FIG. 1, FIG. 1 is a flowchart of a method for controlling inertia support of a grid-forming photovoltaic system according to an embodiment of the present disclosure. A method for controlling inertia support of a grid-forming photovoltaic system is provided according to an embodiment of the present disclosure, and the method includes steps S110 to S150.

In step S110, in response to a requirement for starting the grid-forming photovoltaic system, a VSC inverter unit is blocked, and a DC/DC boost circuit is switched to operate in a charging mode based on a preset duty-cycle control strategy.

In this step, the grid-forming photovoltaic system primarily performs inertia support control through the VSC inverter unit and the DC/DC boost circuit. In response to a requirement for starting the grid-forming photovoltaic system from a user, the VSC inverter unit is blocked, and simultaneously, the DC/DC boost circuit is switched to operate in the charging mode based on the preset duty-cycle control strategy.

The grid-forming photovoltaic system refers to a system that converts solar energy into electrical energy by using a grid-forming control method. The grid-forming control refers to a closed-loop control method based on direct-current voltage control, which remains synchronization with the external grid through a power synchronization mechanism similar to that of a synchronous generator, and requires no phase-locked loop during normal control.

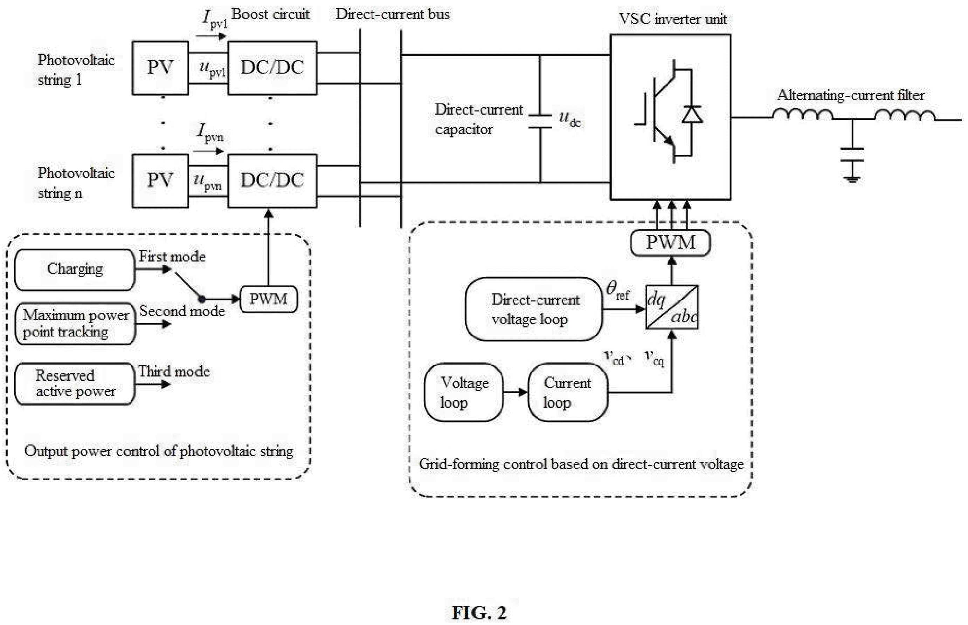

In an embodiment, as shown in FIG. 2, FIG. 2 is a schematic structural diagram of a circuit topology of a grid-forming photovoltaic system according to an embodiment of the present disclosure. In FIG. 2, the grid-forming photovoltaic system includes a photovoltaic string, a DC/DC boost circuit, a direct-current bus, a VSC inverter unit, an alternating-current filter, and the like.

The photovoltaic string refers to a circuit formed by several photovoltaic cells connected in series, which is capable of converting solar energy into direct-current power. In the grid-forming photovoltaic system, the photovoltaic string is typically formed by connecting several sub-strings to increase voltage and power. The DC/DC boost circuit refers to a circuit for boosting a direct-current voltage of the photovoltaic string to a direct-current voltage required by an inverter. In the grid-forming photovoltaic system, the DC/DC boost circuit typically employs the maximum power point tracking technology to achieve the maximum power output of the photovoltaic string. The direct-current bus refers to a direct-current circuit for connecting the photovoltaic string and the VSC inverter unit, which is capable of transmitting the direct-current voltage of the photovoltaic string to the inverter. In the grid-forming photovoltaic system, the direct-current bus is required to possess sufficient voltage and current withstand capability to ensure stable operation of the system. The VSC inverter unit refers to an inverter for converting direct-current power into alternating-current power. In the grid-forming photovoltaic system, the VSC inverter unit is controlled by a controller to achieve power control and stability control of the system. The alternating-current filter refers to a filter for filtering out high-frequency noise and harmonics outputted by the inverter. In the grid-forming photovoltaic system, the alternating-current filter is required to provide sufficient filtering performance to ensure electromagnetic compatibility and stability of the system.

It can be understood that in response to a requirement for starting the grid-forming photovoltaic system from the user, the VSC inverter unit is blocked first to prevent the grid-forming photovoltaic system from outputting power, thereby preventing abnormal conditions such as overvoltage or overcurrent during a starting process of the grid-forming photovoltaic system and ensuring safe and stable operation of the grid-forming photovoltaic system. After the DC/DC boost circuit is switched to operate in the charging mode, a capacitor of a direct-current side serves as configured energy storage in the grid-forming photovoltaic system to store electrical energy. This allows the system to provide stable power support to the power system when required, improving stability and reliability of the power system.

In step S120, a direct-current bus voltage is monitored in real time, and in response to a period lapses from a moment at which the direct-current bus voltage reaches a preset target voltage being greater than a preset target period, the VSC inverter unit is started based on a preset grid-forming control strategy, and the DC/DC boost circuit is switched to operate in a maximum-power-point-tracking mode based on the duty-cycle control strategy.

In this step, after the DC/DC boost circuit is switched to operate in the charging mode in step S110, the direct-current bus voltage is monitored in real time. Timing starts when the direct-current bus voltage rises to the preset target voltage. In response to the period lapses from a moment at which the direct-current bus voltage reaches a preset target voltage exceeding the preset target period, the VSC inverter unit is started based on the preset grid-forming control strategy, and the DC/DC boost circuit is switched to operate in the maximum-power-point-tracking mode based on the duty-cycle control strategy.

The preset grid-forming control strategy refers to a strategy for controlling the grid-forming photovoltaic system. With the strategy, power control and stability control of the grid-forming photovoltaic system are achieved by controlling parameters such as the output power and voltage of a VSC inverter. The duty-cycle control strategy refers to a strategy that achieves control of the output voltage and frequency by adjusting a duty cycle of an output waveform of the VSC inverter, thereby achieving power control and stability control of the grid-forming photovoltaic system. In addition, the maximum-power-point-tracking mode in the present disclosure refers to a control mode for the grid-forming photovoltaic system to achieve maximum power output of the grid-forming photovoltaic system. In the maximum-power-point-tracking mode, the grid-forming photovoltaic system continuously adjusts an output voltage and an output current to maximize an output power of a photovoltaic panel, thereby achieving the maximum power output of the grid-forming photovoltaic system.

When starting the grid-forming photovoltaic system, the preset target voltage and the preset target period of the grid-forming photovoltaic system are obtained first. The preset target voltage refers to a target value for the direct-current bus voltage, and the preset target period refers to a period that the direct-current bus voltage requires to remain at the preset target voltage. After the DC/DC boost circuit is switched to operate in the charging mode, the direct-current bus voltage is monitored in real time. Timing starts when the direct-current bus voltage reaches the preset target voltage, to record a period lapses from a moment at which the direct-current bus voltage reaches a preset target voltage. At the same time, it is determined whether the period is greater than the preset target period. In response to the period being greater than the preset target period, it indicates that the capacitor of the direct-current side is fully charged, and charging should be stopped at this time to avoid overcharging.

In step S130, a dispatching requirement of the grid-forming photovoltaic system is acquired.

In this step, after the VSC inverter is started and the DC/DC boost circuit is switched to operate in the maximum-power-point-tracking mode in step S120, the dispatching requirement of the grid-forming photovoltaic system is acquired, and then the mode of the DC/DC boost circuit can be switched according to the dispatching requirement.

It can be understood that candidates of the dispatching requirement include prioritizing power generation and prioritizing inertia support. The prioritizing power generation means that the grid-forming photovoltaic system gives priority to the power output of photovoltaic power generation during power supply. Specifically, in response to the power generation capacity of the grid-forming photovoltaic system being greater than a load demand, surplus power can be transmitted into the power system to improve the power supply capacity and reliability of the power system. In response to the power generation capacity of the grid-forming photovoltaic system being less than the load demand, power can be supplemented by configuring energy storage or the like to meet the load demand of the power system. The prioritizing inertia support means that the grid-forming photovoltaic system gives priority to stability and reliability of the power system during power supply. Specifically, in response to an abnormal condition such as overvoltage or overcurrent occurring in the power system, the grid-forming photovoltaic system is required to adjust its power output in time to ensure stable operation of the power system. In addition, in response to a load fluctuation or a brief power outage occurring in the power system, the grid-forming photovoltaic system can provide stable power support to the power system by using the inertia support technology, to improve reliability and stability of the power system. Therefore, in the present disclosure, flexible inertia support is achieved based on the dispatching requirement of the grid-forming photovoltaic system.

In step S140, in response to the dispatching requirement being the prioritizing power generation, the DC/DC boost circuit is kept in the maximum-power-point-tracking mode.

In this step, after the dispatching requirement of the grid-forming photovoltaic system is acquired in step S130, a type of the dispatching requirement is determined. In response to the dispatching requirement being the prioritizing power generation, the DC/DC boost circuit is kept in the maximum-power-point-tracking mode in this case.

It can be understood that, in response to the dispatching requirement being the prioritizing power generation, it indicates that a main objective of the grid-forming photovoltaic system is to maximize its power output to meet the load demand of the power system. In this case, the DC/DC boost circuit is required to remain in the maximum-power-point-tracking mode to achieve the maximum power output of the grid-forming photovoltaic system. In the maximum-power-point-tracking mode, an output voltage and an output current are adjusted in real time based on factors such as light intensity and temperature, to maximize an output power of the photovoltaic panel, thereby improving power generation efficiency and energy utilization of the grid-forming photovoltaic system.

In addition, the maximum-power-point-tracking mode of the DC/DC boost circuit can improve adaptability and flexibility of the grid-forming photovoltaic system. In the maximum-power-point-tracking mode, in response to a change in light conditions or a change in the load demand, the output voltage and the output current can be adjusted in real time to achieve the maximum power output of the grid-forming photovoltaic system and match the maximum power output of the grid-forming photovoltaic system with the load demand of the power system, thereby improving adaptability and flexibility of the grid-forming photovoltaic system and ensuring stable operation of the grid-forming photovoltaic system and stable power supply of the power system.

In step S150, in response to the dispatching requirement being the prioritizing inertia support, the DC/DC boost circuit is switched to operate in a reserved active power mode based on the duty-cycle control strategy.

In this step, after the dispatching requirement of the grid-forming photovoltaic system is acquired in step S130, the type of the dispatching requirement is determined. In response to the dispatching requirement being the prioritizing inertia support, the DC/DC boost circuit is switched to operate in the reserved active power mode based on the duty-cycle control strategy.

It can be understood that in response to the dispatching requirement being the prioritizing inertia support, it indicates that a main objective of the grid-forming photovoltaic system is to ensure stability and reliability of the power system. In this case, the DC/DC boost circuit is switched to operate in the reserved active power mode to provide stable active power support, thereby ensuring stable operation of the power system. Specifically, parameters such as output power and voltage of a VSC inverter can be adjusted based on the duty-cycle control strategy, and the DC/DC boost circuit is switched to operate in the reserved active power mode, to achieve active power output control of the power system. In the reserved active power mode, the grid-forming photovoltaic system reserves a portion of power to support the stability of the power system, ensuring stable operation of the power system. In response to a load fluctuation or a brief power outage occurring in the power system, the grid-forming photovoltaic system can provide stable active power support to the power system by using the reserved active power technology, thereby improving reliability and stability of the power system.

In addition, the reserved active power mode of the DC/DC boost circuit can improve adaptability and flexibility of the grid-forming photovoltaic system. In the reserved active power mode, in response to a load fluctuation or a brief power outage occurring in the power system, an output power and an output voltage can be adjusted in real time to meet a load demand and a stability requirement of the power system, thereby improving adaptability and flexibility of the grid-forming photovoltaic system and ensuring stable operation of the grid-forming photovoltaic system and stable power supply of the power system.

In the above embodiments, the grid-forming photovoltaic system includes the VSC inverter unit and the DC/DC boost circuit. In response to a requirement for starting the grid-forming photovoltaic system, the VSC inverter unit is blocked, and the DC/DC boost circuit is switched to operate in a charging mode based on a preset duty-cycle control strategy, thereby achieving smooth charging of the configured energy storage in the grid-forming photovoltaic system during starting of the grid-forming photovoltaic system, providing stable power support to the grid-forming photovoltaic system when necessary. During charging of the configured energy storage, a direct-current bus voltage is monitored in real time. In response to a period lapses from a moment at which the direct-current bus voltage reaches a preset target voltage being greater than the preset target period, the VSC inverter unit is started based on the preset grid-forming control strategy, and the DC/DC boost circuit is switched to operate in the maximum-power-point-tracking mode based on the duty-cycle control strategy. This achieves the maximum power output of the photovoltaic string and improving power generation efficiency and energy utilization of the grid-forming photovoltaic system. Then, the dispatching requirement of the photovoltaic system is acquired, and the mode of the grid-forming photovoltaic system is switched based on the dispatching requirement. For example, in response to the dispatching requirement being the prioritizing power generation, the DC/DC boost circuit is kept in the maximum-power-point-tracking mode, ensuring that all inertia support energy for the grid-forming photovoltaic system originates from energy stored in the configured energy storage. In response to the dispatching requirement being the prioritizing inertia support, the DC/DC boost circuit is switched to operate in the reserved active power mode based on the duty-cycle control strategy, primarily utilizing the energy stored in the configured energy storage while supplementing with the reserved active power of the photovoltaic panels to provide inertia support to the grid-forming photovoltaic system. In the present disclosure, by utilizing the grid-forming control strategy of the VSC inverter unit and three control modes of the DC/DC boost circuit for coordinated control of the grid-forming photovoltaic system, flexible inertia support is achieved while improving system stability under a weak grid condition, thereby improving stability and reliability of the power system.

In an embodiment, the switching the DC/DC boost circuit to operate in a charging mode based on a preset duty-cycle control strategy in step S110 includes steps S111 to S113.

In step S111, an actual total voltage, a first reference total voltage, and an actual total current of the grid-forming photovoltaic system are acquired.

In step S112, a first duty cycle of the DC/DC boost circuit is determined based on the actual total voltage, the first reference total voltage, and the actual total current.

In step S113, pulse width modulation is performed based on the first duty cycle to generate a first control signal, and the DC/DC boost circuit is switched to operate in the charging mode using the first control signal.

In this embodiment, when the DC/DC boost circuit is required to operate in the charging mode, an actual total voltage, a first reference total voltage, and an actual total current of the VSC inverter unit are acquired first, and a first duty cycle of the DC/DC boost circuit is determined based on the actual total voltage, the first reference total voltage, and the actual total current. Then, pulse width modulation is performed based on the first duty cycle to generate a first control signal, and the DC/DC boost circuit is switched to operate in the charging mode using the first control signal.

It can be understood that in the present disclosure, the actual total voltage refers to a total voltage outputted by the grid-forming photovoltaic system, which can be obtained by measuring an output voltage of the grid-forming photovoltaic system in real time using a voltage sensor. During measurement, the voltage sensor can be installed at an end of an output cable of the grid-forming photovoltaic system to calculate the actual total voltage by measuring a voltage difference across the cable. The first reference total voltage refers to a reference voltage set in advance by a user based on performance and actual requirements of the grid-forming photovoltaic system. The actual total current refers to a total current outputted by the grid-forming photovoltaic system, which can be obtained by measuring an output current of the grid-forming photovoltaic system in real time using a current sensor. During measurement, the voltage sensor can be installed at an end of the output cable of the grid-forming photovoltaic system to calculate the actual total current by measuring a current difference across the cable.

The pulse width modulation refers to a technique for controlling a power system, which enables control over parameters such as voltage and current of the power system by adjusting parameters such as pulse width and frequency. In the present disclosure, when generating the first control signal, a pulse width modulation (PWM) signal is adjusted by using a controller. By adjusting a duty cycle of the PWM signal to the first duty cycle, control over the output voltage and the output current is achieved to generate the first control signal.

In an embodiment, in step S112, the DC/DC boost circuit includes a first proportional-integral stage and a second proportional-integral stage, and the determining a first duty cycle of the DC/DC boost circuit based on the actual total voltage, the first reference total voltage, and the actual total current includes steps S1121 and S1122.

In step S1121, a first voltage difference between the actual total voltage and the first reference total voltage is calculated, and a reference total current of the first voltage difference is determined using parameters of the first proportional-integral stage.

In step S1122, a current difference between the actual total current and the reference total current is calculated, and the first duty cycle corresponding to the current difference is determined using parameters of the second proportional-integral stage.

In an embodiment, the DC/DC boost circuit includes the first proportional-integral stage and the second proportional-integral stage. When determining the first duty cycle of the DC/DC boost circuit, a first voltage difference between the actual total voltage and the first reference total voltage is calculated first, and a reference total current of the first voltage difference is determined using parameters of the first proportional-integral stage. Then, a current difference between the actual total current and the reference total current is calculated, and the first duty cycle corresponding to the current difference is determined using parameters of the second proportional-integral stage.

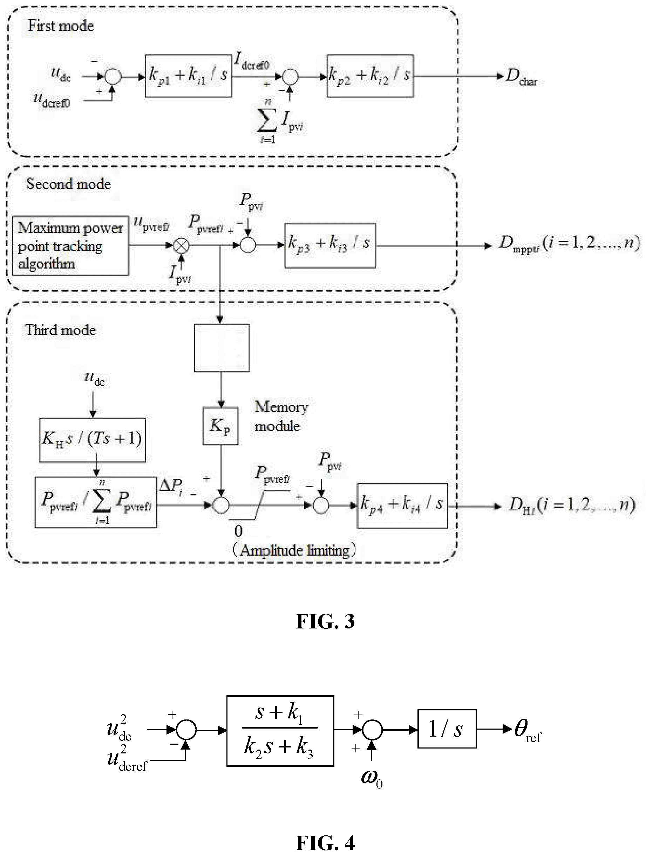

Illustratively, as shown in FIG. 3, FIG. 3 is a schematic diagram of controlling a DC/DC boost circuit according to an embodiment of the present disclosure. A first mode in FIG. 3 represents the charging mode of the DC/DC boost circuit. When the DC/DC boost circuit is required to operate in the first mode, the following operations are performed. First, a first voltage difference between the actual total voltage *u_{dc}* and the first reference total voltage *u*_{*dcref*0} is calculated, and the first voltage difference is subject to the first proportional-integral stage *k*_{*p*1} + *k*_{*i*1}/s to obtain the reference total current *I*_{*dcref*0} of a photovoltaic string in the grid-forming photovoltaic system. Then, a current difference between *I*_{*dcref*0} and the actual total current ${\sum }_{i = 1}^{n} {I}_{pvi}$ is calculated, and the current difference is subject to the second proportional-integral stage *k*_{*p*2} + *k*_{*i*2}/*s* to obtain the first duty cycle *D_{char}*.

In an embodiment, in step S120, the VSC inverter unit includes a lead-lag stage, an integral stage, an alternating-current voltage loop, and a current loop, and the starting the VSC inverter unit based on a preset grid-forming control strategy includes steps S121 to S123.

In step S121, an actual total voltage and a second reference total voltage of the grid-forming photovoltaic system are acquired, and a second voltage difference between the actual total voltage and the second reference total voltage is calculated.

In step S122, a phase angle corresponding to the second voltage difference is determined using parameters of the lead-lag stage and the integral stage, and a first reference valve-side voltage and a second reference valve-side voltage of the VSC inverter unit are determined using parameters of the alternating-current voltage loop and the current loop.

In step S123, a switching signal is generated based on the phase angle, the first reference valve-side voltage, and the second reference valve-side voltage, and the VSC inverter unit is started based on the switching signal.

In this embodiment, the VSC inverter unit includes the lead-lag stage, the integral stage, the alternating-current voltage loop, and the current loop. As shown in FIG. 2, a direct-current voltage loop in FIG. 2 includes the lead-lag stage and the integral stage. When starting the VSC inverter unit, an actual total voltage and a second reference total voltage of the grid-forming photovoltaic system are acquired first, and a second voltage difference between the actual total voltage and the second reference total voltage is calculated. Then, a phase angle corresponding to the second voltage difference is determined using parameters of the direct-current voltage loop, and a first reference valve-side voltage and a second reference valve-side voltage of the VSC inverter unit are determined using parameters of the alternating-current voltage loop and the current loop. Finally, a switching signal is generated based on the phase angle, the first reference valve-side voltage, and the second reference valve-side voltage, and the VSC inverter unit is started based on the switching signal.

Illustratively, as shown in FIG. 4, FIG. 4 is a schematic diagram of controlling a direct-current voltage loop according to an embodiment of the present disclosure. In FIG. 4, when determining the phase angle *θ_{ref}* using parameters of the direct-current voltage loop, the following operations are performed. First, the second voltage difference between the actual total voltage *u_{dc}* and the second reference total voltage *u_{dcref}* is calculated, and the second voltage difference is subject to the lead-lag stage (s + *k*₁)/ (*k*_{2*s*} + *k*₃), to obtain a signal which is subsequently added to a rated angular frequency *ω*₀ of an alternating-current system. Then, the resulting signal is subject to the integral stage 1/s to obtain the phase angle *θ_{ref}*.

Further, as shown in FIG. 2, the construction of the alternating-current voltage loop and the current loop in FIG. 2 is similar to a structure of a general double closed-loop vector control system, which is not repeated here. After the first reference valve-side voltage *v_{cd}* and the second reference valve-side voltage *v_{cq}* of the VSC inverter unit are generated by using parameters of these two loops respectively, the phase angle *θ_{ref}* can be used as a reference angle for abc/dq coordinate transformation and dq/abc inverse coordinate transformation. Then, inverse coordinate transformation and PWM modulation are performed on the first reference valve-side voltage *v_{cd}* and the second reference valve-side voltage *v_{cq}* to generate a switching signal to control the starting of the VSC inverter unit.

In an embodiment, in step S120, the switching the DC/DC boost circuit to operate in a maximum-power-point-tracking mode based on the duty-cycle control strategy includes steps S124 to S126.

In step S124, a reference output voltage, an actual output current, and an actual output power of a photovoltaic string in the grid-forming photovoltaic system are acquired.

In step S125, a second duty cycle of the DC/DC boost circuit is determined based on the reference output voltage, the actual output current, and the actual output power.

In step S126, pulse width modulation is performed based on the second duty cycle to generate a second control signal, and the DC/DC boost circuit is switched to operate in the maximum-power-point-tracking mode using the second control signal.

In this embodiment, when the DC/DC boost circuit is required to operate in the maximum-power-point-tracking mode, a reference output voltage, an actual output current, and an actual output power of a photovoltaic string in the grid-forming photovoltaic system are acquired first, and a second duty cycle of the DC/DC boost circuit is determined based on the reference output voltage, the actual output current, and the actual output power. Then, pulse width modulation is performed based on the second duty cycle to generate a second control signal, and the DC/DC boost circuit is switched to operate in the maximum-power-point-tracking mode using the second control signal.

It can be understood that in the present disclosure, the reference output voltage refers to a theoretical output voltage of a single photovoltaic string in the grid-forming photovoltaic system, which can be obtained from the datasheet or nominal parameters of the grid-forming photovoltaic system. Typically, the reference output voltage is calculated based on factors such as light intensity, temperature, and installation angle of the photovoltaic system. The actual output current refers to an actual output current of a single photovoltaic string, which can be obtained by measuring an output current of the photovoltaic string in real time using a current sensor. During measurement, the current sensor can be installed at an end of an output cable of the photovoltaic string to calculate the actual output current by measuring a current difference across the cable. The actual output power refers to an actual output power of a single photovoltaic string, which can be calculated by multiplying the actual output current by the reference output voltage.

In an embodiment, in step S125, the DC/DC boost circuit further includes a third proportional-integral stage, and the determining a second duty cycle of the DC/DC boost circuit based on the reference output voltage, the actual output current, and the actual output power includes steps S1251 and S1252.

In step S1251, a reference output power of the photovoltaic string is determined based on the reference output voltage and the actual output current.

In step S1252, a first power difference between the actual output power and the reference output power is calculated, and the second duty cycle corresponding to the first power difference is determined using parameters of the third proportional-integral stage.

In this embodiment, the DC/DC boost circuit further includes a third proportional-integral stage. When determining the second duty cycle of the DC/DC boost circuit, the reference output power of the photovoltaic string is determined first based on the reference output voltage and the actual output current, then a first power difference between the actual output power and the reference output power is calculated, and the second duty cycle corresponding to the first power difference is determined using parameters of the third proportional-integral stage.

Illustratively, as shown in FIG. 3, a second mode in FIG. 3 represents the maximum-power-point-tracking mode of the DC/DC boost circuit. When the DC/DC boost circuit is required to operate in the second mode, the following operations are performed. First, the reference output voltage *u_{pvrefi}* is multiplied by the actual output current *Iₚᵥᵢ* to obtain the reference output power *P_{pvrefi}* of the photovoltaic string. Then, a first power difference between the reference output power *P_{pvrefi}* and the actual output power *Pₚᵥᵢ* is calculated, and the first power difference is subject to the third proportional-integral stage *k*_{*p*3} + *k*_{*i*3}/*s* to obtain the second duty cycle *Dₘₚₚₜᵢ*(*i* = 1,2,..,*n*).

In an embodiment, in step S150, the DC/DC boost circuit further includes a derivative filtering stage, a power distribution stage, an amplitude limiting stage, and a fourth proportional-integral stage, and the switching the DC/DC boost circuit to operate in a reserved active power mode based on the duty-cycle control strategy includes steps S151 to S154.

In step S151, an actual total voltage of the grid-forming photovoltaic system and a reference output power of a photovoltaic string in the grid-forming photovoltaic system are acquired.

In step S152, a reference inertia-support power corresponding to the actual total voltage is determined using parameters of the derivative filtering stage and the power distribution stage, and a reference adjustment power corresponding to the reference output power is determined using parameters of the amplitude limiting stage.

In step S153, a second power difference between the reference inertia-support power and the reference adjustment power is calculated, and a third duty cycle corresponding to the second power difference is determined using parameters of the fourth proportional-integral stage.

In step S154, pulse width modulation is performed based on the third duty cycle to generate a third control signal, and the DC/DC boost circuit is switched to operate in a reserved active power mode using the third control signal.

In this embodiment, the DC/DC boost circuit further includes the fourth proportional-integral stage. When determining the third duty cycle of the DC/DC boost circuit, an actual total voltage of the grid-forming photovoltaic system and a reference output power of a photovoltaic string in the grid-forming photovoltaic system are acquired first, a reference inertia-support power corresponding to the actual total voltage is determined using parameters of the derivative filtering stage and the power distribution stage, and a reference adjustment power corresponding to the reference output power is determined using parameters of the amplitude limiting stage. Then, a second power difference between the reference inertia-support power and the reference adjustment power is calculated, and a third duty cycle corresponding to the second power difference is determined using parameters of the fourth proportional-integral stage. Finally, pulse width modulation is performed based on the third duty cycle to generate a third control signal, and the DC/DC boost circuit is switched to operate in the reserved active power mode using the third control signal.

It should be noted that the reference output power here refers to a reference output power stored in a memory module when the DC/DC boost circuit is switched to operate in the maximum-power-point-tracking mode. Therefore, the DC/DC boost circuit is required to operate in the maximum power tracking mode first before being switched to operate in the reserved active power mode so that the reference output power can be saved by the memory module, enabling the DC/DC boost circuit to be switched to the reserved active power mode.

Illustratively, as shown in FIG. 3, a third mode in FIG. 3 represents the reserved active power mode of the DC/DC boost circuit. When the DC/DC boost circuit is required to operate in the third mode, the following operations are performed. First, the actual total voltage *u_{dc}* is subject to the derivative filtering stage *k_{HS}*/(*Ts* + 1) and the power distribution stage ${P}_{pvrefi} / {\sum }_{i = 1}^{n} {P}_{pvrefi}$ to obtain a reference inertia-support power Δ*Pᵢ* of a photovoltaic string. Then, the reference output power *P_{pvrefi}* is multiplied by a reserved power coefficient *Kₚ* to obtain a product, and a second power difference between the product and the reference inertia-support power Δ*Pᵢ* is calculated. The second power difference is subject to the fourth proportional-integral stage *k*_{*p*4} + *k*_{*i*4}/*s* to obtain the third duty cycle *D_{Hi}*(*i* = 1,2,...,*n*).

The apparatus for controlling inertia support according to an embodiment of the present disclosure is described below, and the apparatus for controlling inertia support described below and the method for controlling inertia support described above can refer to each other correspondingly.

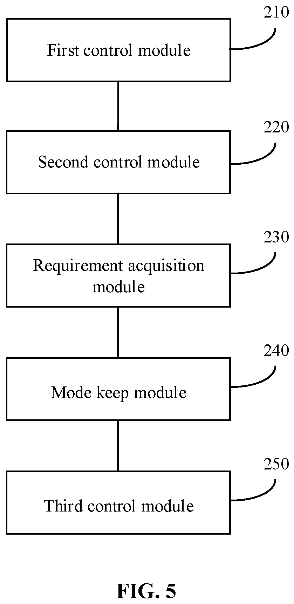

In an embodiment, as shown in FIG. 5, FIG. 5 is a flowchart of an apparatus for controlling inertia support of a grid-forming photovoltaic system according to an embodiment of the present disclosure. An apparatus for controlling inertia support is further provided according to the present disclosure. The apparatus includes a first control module 210, a second control module 220, a requirement acquisition module 230, a mode keep module 240, and a third control module 250.

The first control module 210 is configured to, in response to a requirement for starting the grid-forming photovoltaic system, block a VSC inverter unit and switch a DC/DC boost circuit to operate in a charging mode based on a preset duty-cycle control strategy.

The second control module 220 is configured to monitor a direct-current bus voltage in real time, and in response to a period lapses from a moment at which the direct-current bus voltage reaches a preset target voltage being greater than a preset target period, start the VSC inverter unit based on a preset grid-forming control strategy and switch the DC/DC boost circuit to operate in a maximum-power-point-tracking mode based on the duty-cycle control strategy.

The requirement acquisition module 230 is configured to acquire a dispatching requirement of the grid-forming photovoltaic system.

The mode keep module 240 is configured to keep, in response to the dispatching requirement being the prioritizing power generation, the DC/DC boost circuit in the maximum-power-point-tracking mode.

The third control module 250 is configured to switch, in response to the dispatching requirement being the prioritizing inertia support, the DC/DC boost circuit to operate in a reserved active power mode based on the duty-cycle control strategy.

In the above embodiments, the grid-forming photovoltaic system includes the VSC inverter unit and the DC/DC boost circuit. In response to a requirement for starting the grid-forming photovoltaic system, the VSC inverter unit is blocked, and the DC/DC boost circuit is switched to operate in a charging mode based on a preset duty-cycle control strategy, thereby achieving smooth charging of the configured energy storage in the grid-forming photovoltaic system during starting of the grid-forming photovoltaic system, providing stable power support to the grid-forming photovoltaic system when necessary. During charging of the configured energy storage, a direct-current bus voltage is monitored in real time. In response to a period lapses from a moment at which the direct-current bus voltage reaches a preset target voltage being greater than the preset target period, the VSC inverter unit is started based on the preset grid-forming control strategy, and the DC/DC boost circuit is switched to operate in the maximum-power-point-tracking mode based on the duty-cycle control strategy. This achieves the maximum power output of the photovoltaic string and improving power generation efficiency and energy utilization of the grid-forming photovoltaic system. Then, the dispatching requirement of the photovoltaic system is acquired, and the mode of the grid-forming photovoltaic system is switched based on the dispatching requirement. For example, in response to the dispatching requirement being the prioritizing power generation, the DC/DC boost circuit is kept in the maximum-power-point-tracking mode, ensuring that all inertia support energy for the grid-forming photovoltaic system originates from energy stored in the configured energy storage. In response to the dispatching requirement being the prioritizing inertia support, the DC/DC boost circuit is switched to operate in the reserved active power mode based on the duty-cycle control strategy, primarily utilizing the energy stored in the configured energy storage while supplementing with the reserved active power of the photovoltaic panels to provide inertia support to the grid-forming photovoltaic system. In the present disclosure, by utilizing the grid-forming control strategy of the VSC inverter unit and three control modes of the DC/DC boost circuit for coordinated control of the grid-forming photovoltaic system, flexible inertia support is achieved while improving system stability under a weak grid condition, thereby improving stability and reliability of the power system.

In an embodiment, the first control module 210 includes: a first data acquisition sub-module, a first duty cycle determination sub-module, and a first mode switching sub-module.

The first data acquisition sub-module is configured to acquire an actual total voltage, a first reference total voltage, and an actual total current of the grid-forming photovoltaic system.

The first duty cycle determination sub-module is configured to determine a first duty cycle of the DC/DC boost circuit based on the actual total voltage, the first reference total voltage, and the actual total current.

The first mode switching sub-module is configured to perform pulse width modulation based on the first duty cycle to generate a first control signal, and switch the DC/DC boost circuit to operate in the charging mode using the first control signal.

In an embodiment, the first duty cycle determination sub-module includes a first data calculation unit and a first duty cycle determination unit.

The first data calculation unit is configured to calculate a first voltage difference between the actual total voltage and the first reference total voltage, and determine a reference total current of the first voltage difference using parameters of the first proportional-integral stage.

The first duty cycle determination unit is configured to calculate a current difference between the actual total current and the reference total current, and determine the first duty cycle corresponding to the current difference using parameters of the second proportional-integral stage.

In an embodiment, the second control module 220 includes: an inverter data acquisition sub-module, an inverter data calculation sub-module, and an inverter unit starting sub-module.

The inverter data acquisition sub-module is configured to acquire an actual total voltage and a second reference total voltage of the grid-forming photovoltaic system, and calculate a second voltage difference between the actual total voltage and the second reference total voltage.

The inverter data calculation sub-module is configured to determine a phase angle corresponding to the second voltage difference using parameters of the lead-lag stage and the integral stage, and determine a first reference valve-side voltage and a second reference valve-side voltage of the VSC inverter unit using parameters of the alternating-current voltage loop and the current loop.

The inverter unit starting sub-module is configured to generate a switching signal based on the phase angle, the first reference valve-side voltage, and the second reference valve-side voltage, and start the VSC inverter unit based on the switching signal.

In an embodiment, the second control module 220 further includes: a second data acquisition sub-module, a second duty cycle determination sub-module, and a second mode switching sub-module.

The second data acquisition sub-module is configured to acquire a reference output voltage, an actual output current, and an actual output power of a photovoltaic string in the grid-forming photovoltaic system.

The second duty cycle determination sub-module is configured to determine a second duty cycle of the DC/DC boost circuit based on the reference output voltage, the actual output current, and the actual output power.

The second mode switching sub-module is configured to perform pulse width modulation based on the second duty cycle to generate a second control signal, and switch the DC/DC boost circuit to operate in the maximum-power-point-tracking mode using the second control signal.

In an embodiment, the second duty cycle determination sub-module includes: a second data calculation unit and a second duty cycle determination unit.

The second data calculation unit is configured to determine a reference output power of the photovoltaic string based on the reference output voltage and the actual output current.

The second duty cycle determination unit is configured to calculate a first power difference between the actual output power and the reference output power, and determine the second duty cycle corresponding to the first power difference using parameters of the third proportional-integral stage.

In an embodiment, the third control module 250 includes: a third data acquisition sub-module, a power data calculation sub-module, a third duty cycle determination sub-module, and a third mode switching sub-module.

The third data acquisition sub-module is configured to acquire an actual total voltage of the grid-forming photovoltaic system and a reference output power of a photovoltaic string in the grid-forming photovoltaic system.

The power data calculation sub-module is configured to determine a reference inertia-support power corresponding to the actual total voltage using parameters of the derivative filtering stage and the power distribution stage, and determine a reference adjustment power corresponding to the reference output power using parameters of the amplitude limiting stage.

The third duty cycle determination sub-module is configured to calculate a second power difference between the reference inertia-support power and the reference adjustment power, and determine a third duty cycle corresponding to the second power difference using parameters of the fourth proportional-integral stage.

The third mode switching submodule is configured to perform pulse width modulation based on the third duty cycle to generate a third control signal, and switch the DC/DC boost circuit to operate in the maximum-power-point-tracking mode using the third control signal.

In an embodiment, a storage medium is further provided according to the present disclosure. The storage medium stores computer-readable instructions. When executed by one or more processors, the computer-readable instructions cause the one or more processors to perform the method for controlling inertia support according to any one of the above embodiments.

In an embodiment, a computer device is further provided according to the present disclosure. The computer device stores computer readable instructions. When executed by one or more processors, the computer readable instructions cause the one or more processors to perform the method for controlling inertia support according to any one of the above embodiments.

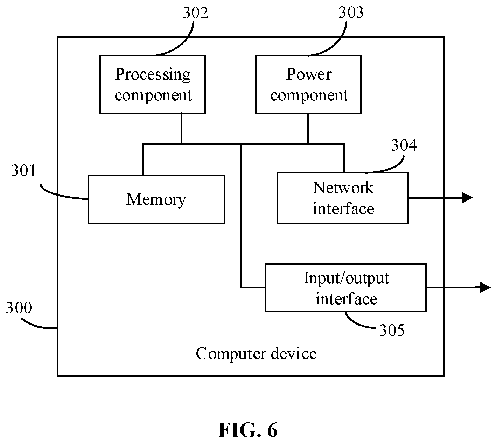

Illustratively, as shown in FIG. 6, FIG. 6 is a schematic diagram of an internal structure of a computer device according to an embodiment of the present disclosure. The computer device 300 may be provided as a server. Referring to FIG. 6, the computer device 300 includes a processing component 302, which further includes one or more processors, and a memory resource represented by a memory 301. The memory resource is used for storing instructions such as application programs executable by the processing component 302. The application programs stored in the memory 301 may include one or more modules each correspond to a set of instructions. Further, the processing component 302 is configured to execute instructions to perform the method for controlling inertia support according to any one of the above embodiments.

The computer device 300 may further include a power component 303 which is configured to perform power management of the computer device 300, a wired or wireless network interface 304 which is configured to connect the computer device 300 to the network, and an input/output (I/O) interface 305. The computer device 300 can operate an operating system based on the memory 301. For example, the operating system is the Windows Server TM, Mac OS XTM, Unix TM, Linux TM, Free BSDTM, or the like.

Those skilled in the art can understand that the structure shown in FIG. 6 is only a block diagram of a partial structure related to the solution of the present disclosure, and is not to limit the computer device to which the solution of the present disclosure is applied. The computer device may include more or fewer components than shown in FIG. 6, or combine some components, or have a different arrangement of components.

It should be further noted that relationship terms such as "first" and "second" herein are only used to distinguish one entity or operation from another entity or operation, rather than to necessitate or imply that an actual relationship or order exists between these entities or operations. Furthermore, the term "comprise", "include" or any other variation thereof is to cover a non-exclusive inclusion, so that a process, a method, an article, or a device including a set of elements includes not only those elements, but also other elements not expressly listed or elements inherent in such a process, method, article, or device. Unless expressively limited otherwise, the statement "comprising one......" does not exclude the case that additional similar elements are included in the process, method, article or device that includes the elements.

Each of the embodiments in this specification is described in a progressive manner, each of the embodiments emphasizes the difference from other embodiments, each of the embodiments may be combined as needed, and the same or similar parts among the embodiments may be referred to each other.

With the above description of the disclosed embodiments, those skilled in the art can implement or practice the present disclosure. Various modifications made to the embodiments are apparent to those skilled in the art. The general principle defined herein can be implemented in other embodiments without departing from the spirit and scope of the present disclosure. Therefore, the present disclosure should not be limited to the embodiments disclosed herein, but is consistent with the widest scope in accordance to the concept and the novel features disclosed herein.

## Claims

1. A method for controlling inertia support of a grid-forming photovoltaic system, wherein the grid-forming photovoltaic system comprises a VSC inverter unit and a DC/DC boost circuit, and the method comprises:
in response to a requirement for starting the grid-forming photovoltaic system, blocking the VSC inverter unit and switching the DC/DC boost circuit to operate in a charging mode based on a preset duty-cycle control strategy;
monitoring a direct-current bus voltage in real time, and in response to a period lapses from a moment at which the direct-current bus voltage reaches a preset target voltage being greater than a preset target period, starting the VSC inverter unit based on a preset grid-forming control strategy and switching the DC/DC boost circuit to operate in a maximum-power-point-tracking mode based on the duty-cycle control strategy;
acquiring a dispatching requirement of the grid-forming photovoltaic system, wherein candidates of the dispatching requirement comprise prioritizing power generation and prioritizing inertia support;
keeping, in response to the dispatching requirement being the prioritizing power generation, the DC/DC boost circuit in the maximum-power-point-tracking mode; and
switching, in response to the dispatching requirement being the prioritizing inertia support, the DC/DC boost circuit to operate in a reserved active power mode based on the duty-cycle control strategy.

2. The method according to claim 1, wherein the switching the DC/DC boost circuit to operate in a charging mode based on a preset duty-cycle control strategy comprises:
acquiring an actual total voltage, a first reference total voltage, and an actual total current of the grid-forming photovoltaic system;
determining a first duty cycle of the DC/DC boost circuit based on the actual total voltage, the first reference total voltage, and the actual total current; and
performing pulse width modulation based on the first duty cycle to generate a first control signal, and switching the DC/DC boost circuit to operate in the charging mode using the first control signal.

3. The method according to claim 2, wherein the DC/DC boost circuit comprises a first proportional-integral stage and a second proportional-integral stage, and
the determining a first duty cycle of the DC/DC boost circuit based on the actual total voltage, the first reference total voltage, and the actual total current comprises:
calculating a first voltage difference between the actual total voltage and the first reference total voltage, and determining a reference total current of the first voltage difference using parameters of the first proportional-integral stage; and
calculating a current difference between the actual total current and the reference total current, and determining the first duty cycle corresponding to the current difference using parameters of the second proportional-integral stage.

4. The method according to claim 1, wherein the VSC inverter unit comprises a lead-lag stage, an integral stage, an alternating-current voltage loop, and a current loop, and
the starting the VSC inverter unit based on a preset grid-forming control strategy comprises:
acquiring an actual total voltage and a second reference total voltage of the grid-forming photovoltaic system, and calculating a second voltage difference between the actual total voltage and the second reference total voltage;
determining a phase angle corresponding to the second voltage difference using parameters of the lead-lag stage and the integral stage, and determining a first reference valve-side voltage and a second reference valve-side voltage of the VSC inverter unit using parameters of the alternating-current voltage loop and the current loop; and
generating a switching signal based on the phase angle, the first reference valve-side voltage, and the second reference valve-side voltage, and starting the VSC inverter unit based on the switching signal.

5. The method according to claim 1, wherein the switching the DC/DC boost circuit to operate in a maximum-power-point-tracking mode based on the duty-cycle control strategy comprises:
acquiring a reference output voltage, an actual output current, and an actual output power of a photovoltaic string in the grid-forming photovoltaic system;
determining a second duty cycle of the DC/DC boost circuit based on the reference output voltage, the actual output current, and the actual output power; and
performing pulse width modulation based on the second duty cycle to generate a second control signal, and switching the DC/DC boost circuit to operate in the maximum-power-point-tracking mode using the second control signal.

6. The method according to claim 5, wherein the DC/DC boost circuit further comprises a third proportional-integral stage, and
the determining a second duty cycle of the DC/DC boost circuit based on the reference output voltage, the actual output current, and the actual output power comprises:
determining a reference output power of the photovoltaic string based on the reference output voltage and the actual output current; and
calculating a first power difference between the actual output power and the reference output power, and determining the second duty cycle corresponding to the first power difference using parameters of the third proportional-integral stage.

7. The method according to claim 1, wherein the DC/DC boost circuit further comprises a derivative filtering stage, a power distribution stage, an amplitude limiting stage, and a fourth proportional-integral stage, and
the switching the DC/DC boost circuit to operate in a reserved active power mode based on the duty-cycle control strategy comprises:
acquiring an actual total voltage of the grid-forming photovoltaic system and a reference output power of a photovoltaic string in the grid-forming photovoltaic system;
determining a reference inertia-support power corresponding to the actual total voltage using parameters of the derivative filtering stage and the power distribution stage, and determining a reference adjustment power corresponding to the reference output power using parameters of the amplitude limiting stage;
calculating a second power difference between the reference inertia-support power and the reference adjustment power, and determining a third duty cycle corresponding to the second power difference using parameters of the fourth proportional-integral stage; and
performing pulse width modulation based on the third duty cycle to generate a third control signal, and switching the DC/DC boost circuit to operate in the maximum-power-point-tracking mode using the third control signal.

8. An apparatus for controlling inertia support, comprising:
a first control module, configured to, in response to a requirement for starting a grid-forming photovoltaic system, block a VSC inverter unit and switch a DC/DC boost circuit to operate in a charging mode based on a preset duty-cycle control strategy;
a second control module, configured to monitor a direct-current bus voltage in real time, and in response to a period lapses from a moment at which the direct-current bus voltage reaches a preset target voltage being greater than a preset target period, start the VSC inverter unit based on a preset grid-forming control strategy and switch the DC/DC boost circuit to operate in a maximum-power-point-tracking mode based on the duty-cycle control strategy;
a requirement acquisition module, configured to acquire a dispatching requirement of the grid-forming photovoltaic system, wherein candidates of the dispatching requirement comprise prioritizing power generation and prioritizing inertia support;
a mode keep module, configured to keep, in response to the dispatching requirement being the prioritizing power generation, the DC/DC boost circuit in the maximum-power-point-tracking mode; and
a third control module, configured to switch, in response to the dispatching requirement being the prioritizing inertia support, the DC/DC boost circuit to operate in a reserved active power mode based on the duty-cycle control strategy.

9. A storage medium, wherein the storage medium stores computer-readable instructions, and the computer-readable instructions, when executed by one or more processors, cause the one or more processors to perform the method according to any one of claims 1 to 7.

10. A computer device, comprising: one or more processors, and a memory, wherein
the memory stores computer-readable instructions, and the computer-readable instructions, when executed by the one or more processors, cause the one or more processors to perform the method according to any one of claims 1 to 7.
